# EUROPÄISCHE PATENTSCHRIFT

(11) **EP 3 600 811 B1**
(45) Veröffentlichungstag und Bekanntmachung des Hinweises auf die Patenterteilung: **19.04.2023**
(21) Anmeldenummer: 18748936.4
(22) Anmeldetag: 08.08.2018
(51) Int. Cl.: B28C 5/12, B28C 5/40, C04B 28/06, B01F 27/1121, B01F 27/192, B01F 27/2123, B01F 27/60

(54) **VERFAHREN ZUR APPLIKATION VON FASERN ENTHALTENDEN MINERALISCHEN BINDEMITTELZUSAMMENSETZUNGEN**
METHOD FOR APPLYING MINERAL BINDER COMPOSITIONS CONTAINING FIBRES
PROCÉDÉ D'APPLICATION DE COMPOSITIONS DE LIAISON MINÉRALE CONTENANT DES FIBRES

(30) Priorität: 09.08.2017 EP 17185657
(43) Veröffentlichungstag der Anmeldung: 05.02.2020
(73) Patentinhaber: Sika Technology AG, 6340 Baar (CH)
(72) Erfinder: LIARD, Maxime, 8050 Zürich (CH); BOURQUIN, Raphael, 8173 Neerach (CH); LOOTENS, Didier, 8700 Küssnacht (CH)
(74) Vertreter: Sika Patent Attorneys
(86) Internationale Anmeldenummer: PCT/EP2018/071452
(87) Internationale Veröffentlichungsnummer: WO 2019/030256

(56) Entgegenhaltungen:
- EP-A2- 0 035 281
- DE-A1- 3 213 349
- US-A- 4 778 276

## Beschreibung

### Technisches Gebiet

Die Erfindung betrifft ein Verfahren zur Applikation von Fasern enthaltenden mineralischen Bindemittelzusammensetzungen sowie damit hergestellte Formkörper.

### Stand der Technik

In den letzten Jahren wurden einige Versuche unternommen, mittels 3D-Druck von Baustoffen, speziell von zementösen Materialien, Bauwerke, Teile von Bauwerken oder andere Formstücke ohne Schalung herzustellen. Dabei ermöglicht das 3D-Druckverfahren neue Dimensionen der Formgebung.

Allerdings sind beim 3D-Druck von Baustoffen, speziell von zementösen Baustoffen einige Probleme noch nicht zufriedenstellend gelöst.

Zement erreicht seine Festigkeit durch Reaktion mit Wasser in einem chemisch ablaufenden Prozess, der Zementhydratation. Typischerweise liegt der Zeitraum von Mischen des Zementes mit Wasser und dem Erreichen von genügender Festigkeit um selbsttragend zu sein im Bereich von mehreren Stunden. Der 3D-Druck erfordert aber eine rasche Festigkeitsentwicklung oder zumindest eine gute Formstabilität des aufgetragenen Materials.

Einige Anwender setzten daher Beton- oder Mörtelmischungen ein, die sehr wenig Wasser enthalten und daher sehr steif sind. Solche Mischungen lassen sich nur über kurze Strecken und mit hohem Pumpendruck fördern und der so hergestellte Formkörper enthält oft Fehlstellen, wie beispielsweise Lufteinschlüsse, ist optisch inhomogen und/oder weist einen schlechten Verbund zwischen den einzelnen aufgetragenen Schichten auf.

CN 203357623 beschreibt ein Verfahren bei dem kurz vor dem Auftragen des Betons diesem durch Vakuum ein Teil des Wassers entzogen wird um ein steifes, selbsttragendes Material zu erhalten. Solche Installationen sind teuer, aufwendig und erhöhen das Gewicht des Druckkopfes in unerwünschter Weise, das so erhaltene Material ist oft nicht homogen, was einerseits zu optischen Mängeln aber auch zu Rissbildung führen kann.

WO 2013/064826 beschreibt ein Verfahren zum schichtweisen Applizieren eines zementösen Materials. Es wird die Zugabe eines Beschleunigers beschrieben, welche über einen separaten Einlass der in der Nähe der Düse mit der das zementöse Material ausgetragen wird angebracht ist, erfolgt, ohne Verwendung einer Mischeinrichtung zum Vermischen des Beschleunigers mit dem zementösen Material. Die beschriebene Anordnung ist nicht geeignet, das zementöse Material mit dem Beschleuniger effektiv zu mischen.

Fasern werden Baumaterialien wie Mörtel und Beton aus unterschiedlichen Gründen beigegeben. Fasern können die rheologische Eigenschaften von Frischmörtel und Frischbeton verbessern, sie können den Frost-Tausalz-Widerstand und die Feuerfestigkeit erhöhen, das Schwinden verringern, kleine Risse überbrücken und teilweise oder vollständig, je nach Einsatz des Betons oder Mörtels, die Armierung ersetzen.

Im 3D-Druck von Mörtel oder Beton sind Fasern speziell vorteilhaft, weil hier der Einsatz einer vorgefertigten Armierung nicht möglich ist. Fasern verbessern auch den Zusammenhalt der Mischung und die Biegezugfestigkeit sowie die Dauerhaftigkeit der hergestellten Formstücke.

Fasern haben aber auch Nachteile.

Beim Mischen und Fördern der trockenen oder nassen Baustoffmischung verklumpen die Fasern leicht und können Förderleitungen verstopfen. Sie können sich auch an Teilen der Pumpen oder von Mischern anhäufen und so diese blockieren oder sogar beschädigen.

Im 3D-Druck ist aber ein homogenes, kontinuierliches Auftragen der Baustoffmischung unabdingbar. Unterbrechungen beim Druck können dazu führen, dass das gesamte bis dahin hergestellte Formstück unbrauchbar wird.

Beim Applizieren von Fasern enthaltenden Baustoffmischungen orientieren sich die Fasern oft in eine Richtung, was ihre Wirksamkeit für den Zusammenhalt der Schichten im 3D-Druck und für die Verhinderung oder Überbrückung von Mikrorissen stark einschränkt.

CN 106007587 beschreibt einen Mörtel der Fasern enthält, für den 3D-Druck. Hierfür werden eine Pulverkomponente und eine wässrige Komponente separat bereitgestellt und anschliessend gemeinsam appliziert.

DE 32 13 349 A1 beschreibt eine Vorrichtung zum Nach- oder Fertigmischen von Beton an der Baustelle. Hierbei können dem Beton Zusatzstoffe wie Lufteinschlussmittel, Verflüssiger und Fasern kontinuierlich zugemischt werden. Insbesondere wird eine Vorrichtung offenbart
- bei der ein vorgemischter Beton bzw. Fertigbeton eingefüllt wird,
- welche eine Förderschnecke und einen kontinuierlich arbeitenden Mischer umfassend eine Schnecke, umfasst,
- welche Fasern in den kontinuierlich arbeitenden Mischer dosiert,
- welche die Fasern und den Fertigbeton und Zuschlagstoffe im Mischer fortlaufend homogen mischt, und
- welche die Mischung austrägt.

EP 0 035 281 A2 beschreibt ein Verfahren für das Mörtelspritzen. Hier wird eine trockene Mischung mittels eines Luftstroms gefördert und das Anmachwasser oder eine wässrige Lösung wird in diesen Strom zugegeben, bevor die Mischung aus der Düse geblasen wird.

US 4 778 276 A beschreibt eine Vorrichtung zum kontinuierlichen Mischen einer hydraulisch abbindenden Zusammensetzung mit Wasser und Fasern.

Die bisherigen Verfahren lösen die Probleme, die beim 3D-Druck von Fasern enthaltenden Baustoffmischungen auftreten, nicht zufriedenstellend.

Es besteht deshalb Bedarf nach verbesserten Verfahren für den 3D-Druck von Fasern enthaltenden Baustoffmischungen, welche die vorstehend genannten Nachteile möglichst überwinden.

### Darstellung der Erfindung

Aufgabe der vorliegenden Erfindung ist es daher, ein verbessertes Verfahren für den 3D-Druck von Fasern enthaltenden mineralischen Bindemittelzusammensetzungen zur Verfügung zu stellen. Das Verfahren soll insbesondere eine effiziente, zuverlässige und möglichst rasche und unterbrechungsfreie Applikation der Fasern enthaltenden mineralischen Bindemittelzusammensetzung ermöglichen. Dies nach Möglichkeit bei hoher Qualität der aufgetragenen Schichten bezüglich Festigkeitsentwicklung und optischer Einheitlichkeit.

Überraschenderweise wird diese Aufgabe durch ein Verfahren, wie in Anspruch 1 beschrieben, gelöst.

Die Trennung der Schritte "Bereitstellung der wasserhaltigen mineralischen Bindemittelzusammensetzung" und "Vermischen des wässrigen Beschleunigers mit der wasserhaltigen Bindemittelzusammensetzung" bewirkt eine starke Flexibilisierung des Verfahrens. Die wasserhaltige mineralische Bindemittelzusammensetzung bleibt über einen längeren Zeitraum gut verarbeitbar, weil der wässrige Beschleuniger erst mit dem kontinuierlichen Mischer eingemischt wird. Ein hoher Druck in der Fördereinrichtung, insbesondere in einem Schlauch, zwischen Pumpe und kontinuierlichem Mischer wird dadurch vermieden sowie ein zu frühes Ansteifen oder Härten der Bindemittelzusammensetzung, speziell bei ungeplanten Wartezeiten.

Weiters können der Ort der Bereitstellung der wasserhaltigen Bindemittelzusammensetzung und der Ort der Applikation räumlich getrennt sein, was wegen der oft engen Platzverhältnisse an der Druckstelle vorteilhaft ist.

Die Verwendung von Fasern in der Mischung erhöht die Widerstandsfähigkeit gegen Bruch und Rissausbreitung, bewirkt eine Reduktion des Schwindens und kleiner Schwindrisse, verbessert die Feuerbeständigkeit und erhöht die Biegezugfestigkeit im fertigen Formkörper. Je nach eingesetzten Fasern, können Fasern zusätzlich den Zusammenhalt der applizierten Schichten verbessern.

Durch die Verwendung des kontinuierlichen Mischers mit mindestens einem dynamischen Mischelement wird der wässrige Beschleuniger, die Fasern, und die wasserhaltige mineralische Bindemittelzusammensetzung sehr gut und effektiv vermischt, wodurch die aufgetragenen Schichten einheitlich und rasch aushärten.

Überraschenderweise kommt es weder in dem Mischer noch in der Druckeinrichtung zu einer Agglomeration der Fasern, die beschleunigte

Bindemittelzusammensetzung kann ohne Unterbrechung und rasch appliziert werden und die Fasern sind gleichmässig in der beschleunigten wasserhaltigen Bindemittelzusammensetzung verteilt.

Überraschenderweise ist der Materialaustrag aus dem Mischer sehr konstant, auch wenn die Leistung der Pumpe beim Fördern der wasserhaltigen mineralischen Bindemittelzusammensetzung Schwankungen aufweist, wie es bei normalen Beton- und Mörtelpumpen oft der Fall ist. Überraschenderweise ist die beschleunigte Bindemittelzusammensetzung nach dem Mischer ohne grobe Lufteinschlüsse und sehr homogen, die Fasern sind gleichmässig in alle Richtungen verteilt und die Form der aufgetragenen Schichten ist sehr gleichmässig und optisch ansprechend ohne Fehlstellen. Dabei ist eine Zwischenhaftung, also eine Haftung zwischen benachbarten Schichten, überraschend gut ausgeprägt, sodass die Bereiche zwischen den Schichten keine Schwachstellen darstellen.

Durch das Verfahren kann die Fasern enthaltende beschleunigte Bindemittelzusammensetzung in zuverlässiger Art und Weise rasch und in homogenen Schichten aufgetragen werden, wodurch auch grosse Formkörper einfach, mit minimalem Zeitaufwand und ästhetisch ansprechend hergestellt werden können.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Verfahren laut Anspruch 1.

Der 3D-Druck ist ein schalungsfreies formgebendes Verfahren. Das Material wird Schicht für Schicht aufgetragen und so dreidimensionale Gegenstände erzeugt. Dabei erfolgt der schichtweise Aufbau computergesteuert aus einem oder mehreren flüssigen oder festen Werkstoffen nach vorgegebenen Massen und Formen.

Unter "3D-Druck" auch als "Freiform-Konstruktion" bezeichnet, versteht man im vorliegenden Dokument ein Verfahren zur Herstellung von Formkörpern, bei dem ein verformbares Material in mehreren Schichten oder kleineren Portionen aufgebracht wird, und nach dem Aushärten einen festen Formkörper bildet. Das Aufbringen der Schichten erfolgt hierbei nicht durch Versprühen.

Unter "mineralisches Bindemittel" versteht man im vorliegenden Dokument insbesondere ein Bindemittel, welches in Anwesenheit von Wasser in einer Hydratationsreaktion zu festen Hydraten oder Hydratphasen reagiert.

Unter "mineralische Bindemittelzusammensetzung" versteht man im vorliegenden Dokument entsprechend eine Zusammensetzung enthaltend mindestens ein mineralisches Bindemittel. Diese enthält insbesondere das Bindemittel, Füllstoffe und optional eines oder mehrere Zusatzmittel.

Unter "wasserhaltige mineralische Bindemittelzusammensetzung" versteht man im vorliegenden Dokument eine mit Wasser gemischte mineralische Bindemittelzusammensetzung, insbesondere in fluider Form.

Unter "zementöses Bindemittel" wird im vorliegenden Dokument insbesondere ein Bindemittel mit einem Anteil von wenigstens 5 Gewichts-%, insbesondere wenigstens 20 Gewichts-%, bevorzugt wenigstens 35 Gewichts-%, im Speziellen wenigstens 65 Gewichts-%, bei einem maximalen Gehalt von 100 Gewichts-%, Zementklinker verstanden. Der Zementklinker umfasst bevorzugt einen Portlandzementklinker, einen Calciumaluminatklinker oder einen Calciumsulfoaluminatklinker. Mit Zementklinker ist im vorliegenden Zusammenhang insbesondere gemahlener Zementklinker gemeint.

Unter "Fasern" werden im vorliegenden Dokument Materialien verstanden, deren Verhältnis von Länge zu Durchmesser beziehungsweise von Länge zu Äquivalentdurchmesser mindestens 10:1 beträgt. Dieses Verhältnis wird auch als Formfaktor bezeichnet.

Unter "Äquivalentdurchmesser einer Faser" wird im vorliegenden Dokument der Durchmesser verstanden, den ein Kreis aufweist, der die selbe Fläche hat, wie die Querschnittsfläche einer Faser mit nicht rundem Querschnitt.

Unter "Mörtel" oder "Beton" werden im vorliegenden Dokument wässrige Dispersionen verstanden, die mindestens einen Zement und mindestens einen mineralischen Füllstoff enthalten und die fähig sind, nach der Hydratation des Zementes in einer festen Form auszuhärten. Unter "Mörtel" werden hierbei Dispersionen die Füllstoffe mit Partikelgrössen bis maximal etwa 8 mm, und unter "Beton" Dispersionen die auch Füllstoffe mit Partikelgrössen über 8 mm enthalten, verstanden.

Unter "Frischmörtel" oder "Frischbeton" werden im vorliegenden Dokument ein Mörtel oder Beton unmittelbar nach dem Vermischen der Bestandteile mit Wasser verstanden.

Unter "selbsttragend" wird im vorliegenden Dokument eine Materialeigenschaft verstanden, bei der das Material nach der Formgebung die einzelnen Dimensionen um maximal 10% verändert, sofern keine äussere Kraft einwirkt. Das bedeutet, dass ein extrudierter Strang mit quadratischem Querschnitt und einer Seitenlänge von 10 mm nach dem Härten eine Höhe von 9 bis 10 mm und eine Breite von 10 bis 11 mm aufweist.

Unter "dynamisches Mischelement" wird im vorliegenden Dokument ein Bauteil verstanden, das bewegbare Elemente umfasst und geeignet ist, feste und/oder flüssige Bestandteile zu vermischen.

Bei dem Verfahren wird eine wasserhaltige mineralische Bindemittelzusammensetzung bereitgestellt. Diese enthält mindestens ein mineralisches Bindemittel. Ein geeignetes mineralisches Bindemittel ist insbesondere ein mineralisches Bindemittel, welches in Anwesenheit von Wasser in einer Hydratationsreaktion zu festen Hydraten oder Hydratphasen reagiert. Dies kann insbesondere ein hydraulisches Bindemittel, welches mit Wasser auch unter Wasser erhärtbar ist, wie insbesondere Zement oder hydraulischer Kalk, oder ein latent hydraulisches Bindemittel, welches unter dem Einwirken von Zusätzen mit Wasser abbindet, wie insbesondere Schlacke, oder ein puzzolanisches Bindemittel, wie insbesondere Flugasche, oder ein nicht hydraulisches Bindemittel, wie insbesondere Gips in Form von Anhydrit oder Halbhydrat-Gips, sein.

Bevorzugt ist das mineralische Bindemittel ausgewählt aus der Gruppe bestehend aus Zement, Gips, gebrannter Kalk, Schlacke und Flugasche und Mischungen davon.

Bevorzugt umfasst die mineralische Bindemittelzusammensetzung mindestens ein hydraulisches Bindemittel, bevorzugt ein zementöses Bindemittel, insbesondere Portlandzement, Calciumaluminatzement, Calciumsulfoaluminatzement oder Mischungen davon.

Als Zement kann jeder verfügbare Zementtyp oder eine Mischung von zwei oder mehreren Zementtypen verwendet werden, beispielsweise die unter der DIN EN 197-1 klassifizierten Zemente: Portlandzement (CEM I), Portlandkompositzement (CEM II), Hochofenschlackezement (CEM III), Pozzolanischer Zement (CEM IV) und Kompositzement (CEM V). Selbstverständlich sind Zemente, die gemäß einem alternativen Standard, wie beispielsweise dem ASTM-Standard oder dem indischen Standard, produziert werden, gleichermassen geeignet.

Besonders bevorzugt ist ein Zement gemäss Euronorm EN 197-1, ein Calciumsulfoaluminatzement, ein Calciumaluminatzement, oder Mischungen davon, gegebenenfalls in einer Mischung mit Calciumsulfat.

Am meisten bevorzugt ist Portlandzement oder ein Zement enthaltend Portlandzement gemäss EN 197-1. Portlandzement ist besonders einfach verfügbar und ermöglicht Mörtel mit guten Eigenschaften.

Speziell geeignet sind auch Mischungen aus Zement, Calciumaluminatzement und Calciumsulfat oder Mischungen aus Zement und Calciumsulfoaluminatzement. Solche Bindemittelmischungen ermöglichen kurze Abbindezeiten und hohe Frühfestigkeiten.

Bevorzugt ist ein Anteil des hydraulischen Bindemittels am gesamten mineralischen Bindemittel von wenigstens 5 Gewichts-%, insbesondere wenigstens 20 Gewichts-%, mehr bevorzugt wenigstens 35 Gewichts-%, im Speziellen wenigstens 65 Gewichts-%, bei einem maximalen Anteil von 100 Gewichts-%. Gemäss einer weiteren vorteilhaften Ausführungsform besteht das mineralische Bindemittel zu 95 bis 100 Gewichts-% aus hydraulischem Bindemittel, insbesondere aus Zementklinker.

Es kann auch vorteilhaft sein, wenn die Bindemittelzusammensetzung zusätzlich oder anstelle eines hydraulischen Bindemittels andere Bindemittel enthält. Dies sind insbesondere latent hydraulische Bindemittel und/oder puzzolanische Bindemittel. Geeignete latent hydraulische und/oder puzzolanische Bindemittel sind insbesondere Schlacke, Hüttensand, Flugasche und/oder Silicafume.

Die mineralische Bindemittelzusammensetzung enthält bevorzugt weiterhin Füllstoffe, insbesondere mineralische Füllstoffe. Füllstoffe sind chemisch inerte feste partikuläre Materialien und werden in verschiedenen Formen, Grössen und als unterschiedliche Materialien angeboten, die von feinsten Sandpartikeln bis grossen groben Steinen variieren. Geeignet sind prinzipiell alle Füllstoffe die üblicherweise für Beton und Mörtel verwendet werden. Beispiele von besonders geeigneten Füllstoffen sind Gesteinskörnungen, Kies, Sand, insbesondere Quarzsand und Kalksteinsand, zerkleinerte Steine, kalzinierte Kiesel oder leichte Füllstoffe wie Blähton, Blähglas, Schaumglas, Bimsstein, Perlit und Vermiculit. Weitere vorteilhafte Füllstoffe sind Calciumcarbonat, Aluminiumoxid, amorphe Kieselsäure (Silicafume) oder kristalline Kieselsäure (Quarzmehl).

Die Partikelgrösse richtet sich nach der Anwendung und liegt im Bereich von 0.1 µm bis 32 mm und mehr. Bevorzugt werden unterschiedliche Partikelgrössen gemischt um die Eigenschaften der wasserhaltigen mineralischen Bindemittelzusammensetzung optimal einzustellen. Es können auch Füllstoffe aus unterschiedlichen Materialien gemischt werden. Die Partikelgrösse kann mit Hilfe einer Siebanalyse bestimmt werden.

Bevorzugt sind Füllstoffe mit Partikelgrössen von maximal 8 mm, mehr bevorzugt maximal 5 mm, noch mehr bevorzugt maximal 3.5 mm, am meisten bevorzugt maximal 2.2 mm.

Bevorzugt enthält die mineralische Bindemittelzusammensetzung Füllstoffe von denen mindestens 30 Gewichts-%, mehr bevorzugt mindestens 40 Gewichts-%, am meisten bevorzugt mindestens 50 Gewichts-%, kleiner als 2 mm, bevorzugt kleiner als 1 mm, mehr bevorzugt kleiner als 0.5 mm, sind, bezogen auf eine Gesamtmenge von 100 Gewichts-% aller Füllstoffe in der Bindemittelzusammensetzung.

Geeignete Füllstoffe mit kleiner Partikelgrösse sind insbesondere feine Quarzsande oder Calciumcarbonat-Pulver

Bindemittelzusammensetzungen mit solchen Partikelgrössen sind gut förderbar, lassen sich in dem kontinuierlichen Mischer gut mit dem wässrigen Beschleuniger vermischen und ergeben nach der Applikation eine sehr homogene Oberfläche.

In speziellen Anwendungen können auch Füllstoffe mit Partikelgrössen bis 32 mm, mehr bevorzugt bis 20 mm, am meisten bevorzugt bis 16 mm verwendet werden.

Der applizierte Baustoff enthält Fasern. Geeignet sind prinzipiell alle Fasern, die in wässrigem zementösen Medium weitgehend inert sind. Die Fasern können einen runden oder auch anders geformten Querschnitt aufweisen, bevorzugt sind runde Fasern oder flache Fasern mit einem in etwa rechteckigen Querschnitt.

Bevorzugte Fasern sind ausgewählt aus der Gruppe bestehend aus Metallfasern, insbesondere Stahlfasern oder amorphe Metallfasern, mineralischen Fasern, insbesondere Glasfasern, Basaltfasern oder Wollastonit-Fasern, natürlichen Fasern, insbesondere Cellulosefasern, Hanffasern, Leinenfasern oder Seidenfasern, und Kunststofffasern, insbesondere Kohlenstofffasern, Fasern aus Polypropylen, Polyethylen, Polyvinylalkohol, Polyamid, Polyaramid, Polyacrylnitril oder Polyester, und Mischungen davon, wobei Metallfasern, Kohlenstofffasern, Fasern aus Polypropylen oder Fasern aus Polyvinylalkohol, oder Mischungen davon, speziell bevorzugt sind.

Fasern aus Copolymeren, insbesondere solche die Propyleneinheiten und/oder Ethyleneinheiten enthalten, oder Fasern aus Polymermischungen, insbesondere solche die Polypropylen enthalten, sind ebenfalls geeignet.

Solche Fasern sind in grossen Mengen und unterschiedlichen Grössen kommerziell erhältlich.

Es hat sich überraschenderweise gezeigt, dass Fasern die flexibel bzw. biegbar sind, weniger dazu neigen, die Misch- und/oder Fördereinrichtungen zu verstopfen und/oder zu blockieren und auch kaum mechanische Schäden an den Einrichtungen verursachen.

Bevorzugt sind daher Fasern, die flexibel sind, insbesondere eine Biegesteifigkeit von maximal 20 N·mm², bevorzugt maximal 10 N·mm² mehr bevorzugt maximal 1 N·mm², besonders bevorzugt maximal 0.2 N mm² aufweisen, wobei sich die Biegesteifigkeit bei flachen Fasern auf die Biegerichtung bezieht, in die die geringste Kraft für die Biegung nötig ist. Dabei berechnet sich die Biegesteifigkeit aus dem Produkt des Elastizitätsmoduls der Faser und dem Flächenträgheitsmoment des Faserquerschnitts.

Bevorzugt weisen die Fasern eine Länge von 5 bis 100 mm auf.

Bevorzugt beträgt das Verhältnis von Faserlänger zu Faserdurchmesser oder Äquivalentdurchmesser mindestens 10, mehr bevorzugt mindestens 30, noch mehr bevorzugt mindestens 50 am meisten bevorzugt mindestens 100.

Bevorzugt sind Fasern die
a) rund sind und eine Länge von 5 mm bis 100 mm, mehr bevorzugt von 8 mm bis 60 mm, noch mehr bevorzugt von 10 mm bis 30 mm, am meisten bevorzugt von 12 mm bis 20 mm und einen Durchmesser von 5 µm bis 500 µm, mehr bevorzugt von 7 µm bis 300 µm, noch mehr bevorzugt von 10 µm bis 250 µm, am meisten bevorzugt von 14 µm bis 200 µm aufweisen, oder
b) flach sind und eine Länge von 5 mm bis 100 mm, mehr bevorzugt von 8 mm bis 60 mm, noch mehr bevorzugt von 10 mm bis 30 mm, am meisten bevorzugt von 12 mm bis 20 mm, eine Breite von 5 µm bis 2 mm, mehr bevorzugt von 10 µm bis 1.5 mm, am meisten bevorzugt von 0.5 mm bis 1.2 mm und eine Höhe von 5 µm bis 300 µm, mehr bevorzugt von 7 µm bis 250 µm, noch mehr bevorzugt von 10 µm bis 200 µm, am meisten bevorzugt von 20 µm bis 150 µm, aufweisen.

Fasern mit diesen Dimensionen lassen sich gut in den Baustoff einmischen und sind speziell geeignet, die Eigenschaften des Baustoffes zu verbessern.

Es ist auch möglich, unterschiedliche Fasern zu mischen. Die Unterschiede können in dem Material, in der Länge und/oder im Durchmesser beziehungsweise Äquivalentdurchmesser der Fasern liegen.

Wasserhaltige Bindemittelzusammensetzung zusammen mit solchen Fasern lassen sich in dem erfindungsgemässen Verfahren gut fördern und drucken ohne die Förder-, Misch- oder Druckeinrichtung zu blockieren und verbessern den Zusammenhalt der aufgetragenen Schichten.

Die Fasern können eine speziell behandelte Oberfläche aufweisen, insbesondere können sie mechanisch oder chemisch aufgeraut, geprägt, oder beschichtet sein.

Die Fasern können auch speziell geformt sein, insbesondere an den Enden gehakt sein oder eine knotenförmige, gezahnte oder wellenförmige Struktur aufweisen.

Fasern mit spezieller Struktur oder Oberfläche haften besonders gut in der mineralischen Bindemittelmatrix.

Bevorzugt enthält ein Kubikmeter der die Fasern enthaltenden Baustoff 0.4 bis 25 Liter Fasern, mehr bevorzugt 0.5 bis 20 Liter Fasern besonders bevorzugt 1 bis 15 Liter Fasern, gerechnet mit der Rohdichte der Fasern.

Je nach Fasertyp, verbessert eine solche Menge an Fasern die Eigenschaften der ausgehärteten Bindemittelzusammensetzung ohne die Förderbarkeit und Mischbarkeit der wasserhaltigen mineralischen Bindemittelzusammensetzung zu stark zu beeinflussen.

In einer beispielhaften Ausführungsform werden die Fasern in der wasserhaltigen mineralischen Bindemittelzusammensetzung bereitgestellt.

In einer beispielhaften Weiterbildung werden die Fasern in der wasserhaltigen mineralischen Bindemittelzusammensetzung dem Mischer zugeführt werden.

Das Bereitstellen und/oder Zuführen der Fasern in der wasserhaltigen mineralischen Bindemittelzusammensetzung hat den Vorteil, dass dadurch keine zusätzliche Komponenten dem Mischer zugeführt werden muss, und dass die Fasern bereits vor dem Mischen in der wasserhaltigen mineralischen Bindemittelzusammensetzung verteilt sind.

In einer alternativen Ausführungsform werden die Fasern im wässrigen Beschleuniger bereitgestellt und/oder im wässrigen Beschleuniger dem Mischer zugeführt.

In einer weiteren alternativen Ausführungsform werden die Fasern in einer zusätzlichen Komponente, insbesondere in einer zusätzlichen wässrigen Komponente, bereitgestellt und/oder in einer zusätzlichen Komponente, insbesondere in einer zusätzlichen wässrigen Komponente, dem Mischer zugeführt.

In einer weiteren alternativen Ausführungsform werden die Fasern an sich, d.h. ohne weitere insbesondere flüssige Bestandteile, bereitgestellt und/oder dem Mischer zugeführt.

Optional kann die wasserhaltige mineralische Bindemittelzusammensetzung wenigstens ein Additiv, beispielsweise ein Betonzusatzmittel und/oder ein Mörtelzusatzmittel und/oder Prozesschemikalien beinhalten. Das wenigstens eine Additiv umfasst insbesondere einen Entschäumer, ein Netzmittel, einen Farbstoff, ein Konservierungsmittel, ein Fliessmittel, einen Verzögerer, weitere Beschleuniger, ein Polymer, einen Luftporenbildner, ein Rheologiehilfsmittel, einen Viskositätsmodifizierer, ein Pumphilfsmittel, einen Schwindreduzierer oder einen Korrosionsinhibitor oder Kombinationen davon.

Die Verwendung eines Fliessmittels oder Verflüssigers in der wasserhaltigen mineralischen Bindemittelzusammensetzung verbessert die Fliessfähigkeit der Zusammensetzung. Als Fliessmittel kommen beispielsweise Lignosulfonate, sulfonierte Naphthalin-Formaldehyd-Kondensate, sulfonierte Melamin-Formaldehyd-Kondensate, sulfonierte Vinylcopolymere, Polyalkylenglykole mit Phosphonatgruppen, Polyalkylenglykole mit Phosphatgruppen, Polycarboxylate oder Polycarboxylatether, oder Mischungen der genannten Fliessmittel, in Frage, wobei unter Polycarboxylatethern Kammpolymere mit anionischen Gruppen am Polymer-Rückgrat und Polyalkylenoxid-Seitenketten, wobei die anionischen Gruppen im Besonderen ausgewählt sind aus Carboxylatgruppen, Sulfonatgruppen, Phosphonatgruppen oder Phosphatgruppen, verstanden werden.

Das Fliessmittel beinhaltet bevorzugt einen Polycarboxylatether. Insbesondere ist das Fliessmittel ein Kammpolymer umfassend ein Polycarboxylat-Rückgrat mit daran gebundenen Polyalkylenoxid-Seitenketten, insbesondere Polyethylenoxid-Seitenketten. Die Seitenketten sind dabei insbesondere über Ester-, Ether-, Imid- und/oder Amidgruppen an das Polycarboxylat-Rückgrat gebunden.

Entsprechende Kammpolymere werden auch von Sika Schweiz AG unter der Handelsnamenreihe Sika^{®} ViscoCrete^{®} kommerziell vertrieben.

Der Einsatz von Erhärtungsverzögerern kann vorteilhaft sein, da dadurch die Verarbeitungsdauer der wasserhaltigen Bindemittelzusammensetzung verlängert wird. Der Erhärtungsverzögerer ist bevorzugt eine Hydroxycarbonsäure, insbesondere Weinsäure, Zitronensäure oder Gluconsäure, ein Zucker, insbesondere Saccharose, ein Phosphat oder ein Phosphonat, oder deren Salze oder Mischungen davon.

Der Einsatz von Rheologiehilfsmitteln kann vorteilhaft sein, da dadurch der Zusammenhalt der Zusammensetzung verbessert werden kann. Bevorzugte Rheologiehilfsmittel sind natürliche oder modifizierte Polysaccharide, insbesondere Zelluloseether oder -ester, Stärke, modifizierte Stärke, Xanthan, Welan, Diutan oder Carraageen.

Insbesondere bevorzugt ist das Rheologiehilfsmittel Methylcellulose, Hydroxyethylcellulose, Methyl-Hydroxyethylcellulose oder Xanthan Gum, oder Mischungen davon.

Der Einsatz von Pumphilfsmitteln kann vorteilhaft sein, da der innere Zusammenhalt, die Geschmeidigkeit und die Gleitfähigkeit der Zusammensetzung verbessert werden. Bevorzugt enthält das Pumphilfsmittel wasserlösliche Polymere, wie insbesondere SikaPump^{®} von Sika.

In einer bevorzugten Ausführungsform enthält die Bindemittelzusammensetzung ein Polymer, insbesondere ein wasserunlösliches, filmbildendes Polymer. Filmbildende Polymere können, wenn sie als Dispersion in einer Flüssigkeit vorliegen, beim Trocknen der Dispersion zu Filmen koagulieren. Bevorzugt ist das Polymer ein Homo-oder Copolymer von Acrylestern, ein Copolymer von Styrol und Butadien, ein Copolymer von Styrol und Arcrylestern oder ein Homo- oder Copolymer von Vinylacetat.

Wässrige Dispersionen solcher Polymere sind kommerziell erhältlich, beispielsweise unter den Handelsnamen Acronal^{®} (BASF), Primal^{™} (DOW) oder Revacryl (Synthomer).

Es können aber auch redispergierbare Polymerpulver, die beim Vermischen mit Wasser Dispersionen bilden, eingesetzt werden. Solche Polymerpulver sind kommerziell erhältlich, beispielsweise unter den Handelsnamen Vinnapas^{®} (Wacker) oder Elotex^{®} (AkzoNobel).

Insbesondere umfasst die mineralische Bindemittelzusammensetzung eine hydraulische Bindemittelzusammensetzung, bevorzugt eine Mörtel- oder Betonzusammensetzung, oder sie besteht daraus.

Falls die Fasern in der wasserhaltigen mineralischen Bindemittelzusammensetzung bereitgestellt werden, wird die Fasern enthaltende wasserhaltige mineralische Bindemittelzusammensetzung bevorzugt durch Vermischen einer trockenen, Fasern enthaltenden mineralischen Bindemittelzusammensetzung mit Wasser bereitgestellt.

Die Zugabe der Fasern kann aber auch erst nach dem Vermischen der keine Fasern enthaltenden mineralischen Bindemittelzusammensetzung mit Wasser erfolgen.

Das Wasser kann weiter noch Additive in gelöster oder dispergierter Form enthalten. Die Additive können aber auch nach der Zugabe des Wassers, als Feststoffe oder in gelöster Form, mit der wasserhaltigen mineralischen Bindemittelzusammensetzung vermischt werden.

Die Herstellung solcher Mischungen ist dem Fachmann von der Bereitstellung von Mörteln oder Betonmischungen bekannt, sie kann insbesondere in einem Batch-Mischer oder auch in einem kontinuierlichen Mischer erfolgen.

Die wasserhaltige mineralische Bindemittelzusammensetzung ist bevorzugt ein Frischmörtel mit einem Ausbreitmass von mindestens 170 mm, mehr bevorzugt von 200 bis 380 mm, besonders bevorzugt von 250 bis 350 mm, bestimmt gemäss DIN EN 1015-3 nach dem Anheben des Setztrichters ohne Hübe des Ausbreittisches.

Weiters bevorzugt ist die wasserhaltige mineralische Bindemittelzusammensetzung ein Frischbeton mit einem Setzmass von mindestens 100 mm, bevorzugt mindestens 200 mm, am meisten bevorzugt mindestens 250 mm, bestimmt nach DIN EN 12350-2.

Wasserhaltige mineralische Bindemittelzusammensetzungen mit solcher Konsistenz lassen sich besonders gut pumpen und fördern, und sehr gut in dem kontinuierlichen Mischer mit dem wässrigen Beschleuniger vermischen.

Bevorzugt umfasst die wasserhaltige mineralische Bindemittelzusammensetzung folgende Bestandteile:
15-50 Gewichtsteile Zement,
40-65 Gewichtsteile Füllstoffe,
0.02-3.5, bevorzugt 0.20-2, mehr bevorzugt 0.85-1.6, Gewichtsteile natürliche oder Kunststoff-Fasern, oder
0.20-8, bevorzugt 0.9-6, mehr bevorzugt 1-5, Gewichtsteile Metallfasern,
0.01-5 Gewichtsteile Additive und
8-25 Gewichtsteile Wasser,
bezogen auf 100 Gewichtsteile wasserhaltige mineralische Bindemittelzusammensetzung.

Die wasserhaltige mineralische Bindemittelzusammensetzung wird, bevorzugt mittels einer Pumpe und einer Förderleitung, insbesondere einem Schlauch, von der Bereitstellung zu dem kontinuierlichen Mischer zugeführt.

Eine gute Förderbarkeit ist für den 3D-Druck wichtig, da sie Voraussetzung für eine homogene Applikation ist.

Speziell für den Druck von grossen Formteilen kann die Länge einer Förderleitung zwischen Pumpe und kontinuierlichem Mischer bis zu 50 m und mehr erreichen, was zu hohem Druck in der Förderleitung führen kann. Ein hoher Druck, insbesondere in einem Schlauch, ist unvorteilhaft, weil das Material stark beansprucht wird und bei Überlastung bersten kann. Gut förderbare Zusammensetzungen können einen zu starken Druckaufbau verhindern.

Bevorzugt liegt der Druck in der Förderleitung zwischen Pumpe und kontinuierlichem Mischer unter 40 bar, mehr bevorzugt unter 25 bar.

Bevorzugt kann vor dem Fördern der wasserhaltigen mineralischen Bindemittelzusammensetzung eine sogenannte "Schmiermischung" durch die Förderleitung und Druckeinrichtung gefördert werden. Die "Schmiermischung" wird nicht appliziert, sie wird typischerweise in einen Abfallbehälter entsorgt. Geeignete Schmiermischungen sind insbesondere wässrige Lösungen eines organischen Polymers, insbesondere SikaPump^{®} Start 1 oder eine dünnflüssige Mischung aus Wasser und Zement und/oder feinem Füllstoff, insbesondere Kalkstein. Bevorzugt wird zuerst eine wässrige Polymerlösung und anschliessend eine dünnflüssige Mischung aus Wasser und Zement und/oder feinem Füllstoff durch die Förderleitung und Druckeinrichtung gepumpt, bevor die wasserhaltige mineralische Bindemittelzusammensetzung gefördert wird.

Die wasserhaltige mineralische Bindemittelzusammensetzung wird mit einem wässrigen Beschleuniger vermischt. Der Beschleuniger ist vorteilhaft ein Erstarrungsbeschleuniger und/oder ein Erhärtungsbeschleuniger oder eine Mischung davon.

Als Beschleuniger können eine Vielzahl von dem Fachmann bekannten Substanzen eingesetzt werden.

Bevorzugt enthält der wässrige Beschleuniger mindestens eine Verbindung ausgewählt aus der Gruppe bestehend aus Aminoalkoholen, Alkali- und Erdalkalinitraten, Alkali- und Erdalkalinitriten, Alkali- und Erdalkalithiocyanaten, Alkali- und Erdalkalihalogeniden, Alkali- und Erdalkalicarbonaten, Glyzerin, Glyzerinderivaten, Glykolen, Glykolderivaten, Aluminiumsalzen, Aluminiumhydroxiden, Alkali- und Erdalkalihydroxiden, Alkali- und Erdalkalisilikaten, Alkali- und Erdalkalioxiden, Kristallisationskeimen, insbesondere CalciumSilikat-Hydrat-Verbindungen in feinteiliger Form, und Mischungen davon.

Besonders bevorzugt enthält der wässrige Beschleuniger ein Aluminiumsalz oder Aluminiumhydroxid, insbesondere Natriumaluminat, Kaliumaluminat, Aluminiumsulfat, Aluminiumhydroxysulfat, Aluminiumhydroxid oder Mischungen davon.

Solche Aluminium-Verbindungen beschleunigen das Abbinden eines hydraulischen Bindemittels speziell gut.

Bevorzugt können auch mehrere wässrige Beschleuniger, die sich in der Zusammensetzung unterscheiden, zusammen oder getrennt voneinander zugegeben werden.

Damit lässt sich beispielsweise eine flexible Anpassung an unterschiedlichste Anwendungen realisieren.

Die Dosierung des Beschleunigers hängt von der Zusammensetzung der wasserhaltigen mineralischen Bindemittelzusammensetzung, insbesondere von der Art und Menge des hydraulischen Bindemittels, der Art und Menge des Verzögerers, wenn vorhanden, und der Menge des Wassers sowie von der Umgebungstemperatur und der Temperatur der wasserhaltigen Bindemittelzusammensetzung ab.

Die Dosierung des Beschleunigers erfolgt bevorzugt in so einer Menge, dass die beschleunigte Zusammensetzung einige Sekunden bis einige Minuten gut formbar bleibt. Dadurch können die Schichten homogen aufgetragen werden, bilden einen guten Zusammenhalt und die Oberfläche des hergestellten Formkörpers, kann, sofern gewünscht, noch nachbehandelt, beispielsweise geglättet werden.

Bevorzugt wird der wässrige Beschleuniger in einer Menge im Bereich von 0.1 bis 8 Gewichtsteilen, mehr bevorzugt 0.3 bis 5 Gewichtsteilen, noch mehr bevorzugt 0.5 bis 2.5 Gewichtsteilen, gerechnet als Feststoff ohne Wasser, bezogen auf 100 Gewichtsteile mineralisches Bindemittel, dosiert.

Der wässrige Beschleuniger wird mit einem dynamischen kontinuierlichen Mischer mit den Fasern und der wasserhaltigen Bindemittelzusammensetzung vermischt.

Neben dem Beschleuniger können noch weitere Additive mit dem Mischer mit der wasserhaltigen Bindemittelzusammensetzung vermischt werden.

Der mindestens eine wässrige Beschleuniger und gegebenenfalls weitere Additive werden bevorzugt über Dosiereinrichtungen im Bereich des kontinuierlichen Mischers dosiert. Die Förderung der wasserhaltigen mineralischen Bindemittelzusammensetzung und des wässrigen Beschleunigers und optional weiterer Additive zu dem Mischer kann beispielsweise über eine oder mehrere Fördereinrichtungen, insbesondere Pumpen und Förderleitungen, erfolgen. Die Fördereinrichtungen sind dabei insbesondere über eine Steuereinheit steuerbar, im Besonderen unabhängig voneinander.

Bevorzugt ist der kontinuierliche Mischer auf dem beweglichen Druckkopf angebracht.

Bevorzugt weist der Druckkopf dabei eine Austragsdüse für die beschleunigte mineralische Bindemittelzusammensetzung auf.

Bevorzugt ist der dynamische kontinuierliche Mischer auf dem beweglichen Druckkopf unmittelbar bei dieser Austragsdüse angebracht. Dadurch lässt sich die zeitliche Festigkeitsentwicklung des mineralischen Bindemittels gezielt einstellen. Im Besonderen kann durch Zugabe eines Beschleunigers die Applikation insgesamt stark beschleunigt werden.

Bevorzugt sind die Dimension und das Gewicht des kontinuierlichen Mischers an die Grösse des Druckkopfes angepasst. So ist es vorteilhaft, wenn der Mischer in einer Druckeinrichtung für kleinere Formteile auch kleiner ist, als der Mischer in einer Druckeinrichtung für grosse Formteile wir Hausteile oder Mauern.

So kann der kontinuierliche Mischer ein Gewicht von 20 bis 100 kg und mehr für den Druck von Formteilen in der Grössenordnung von mehreren Metern aufweisen, oder ein Gewicht von etwa 1 bis 20 kg für den Druck von Formteilen in der Grössenordnung von etwa 5 cm bis 1 m.

Mit dem kontinuierlichen Mischer wird der Beschleuniger sehr rasch, effizient und homogen in die mineralische Bindemittelzusammensetzung eingemischt. Dies ist wichtig, damit die Zusammensetzung beim Auftragen homogen ist und gleichmässig und rasch aushärtet.

In einer beispielhaften Ausführungsform umfasst der Mischer mehr als einen Einlass, insbesondere zwei, drei, vier, fünf, sechs, sieben, oder acht Einlässe.

Das Vorsehen von mehreren Einlässen bietet den Vorteil, dass dadurch insbesondere Bestandteile, welche miteinander reagieren oder zusammen nicht lagerstabil sind, durch separate Einlässe dem Mischbereich des Mischers zugeführt werden können.

Bevorzugt wird der Mischer mit einer Drehzahl der Rührwelle von 500 bis 3000 Umdrehungen pro Minute, mehr bevorzugt von 650 bis 2500 Umdrehungen pro Minute, noch mehr bevorzugt von 800 bis 2000 Umdrehungen pro Minute, am meisten bevorzugt von 1000 bis 1500 Umdrehungen pro Minute betrieben.

Das Mischen bei hoher Drehzahl bewirkt ein rasches und effizientes Mischen, der Bindemittelzusammensetzung mit dem Beschleuniger, was speziell wichtig ist, weil ein schlecht verteilter Beschleuniger in der wässrigen mineralischen Bindemittelzusammensetzung sehr rasch punktuell zu sehr hohen Viskosität und/oder zum Erhärteten des Bindemittels führt, was zur Blockierung und/oder Beschädigung des Mischers führen kann. Wird der Beschleuniger hingegen sehr rasch und effizient mit der wässrigen mineralischen Bindemittelzusammensetzung vermischt, so erfolgt die Erhöhung der Viskosität und das Erhärten homogen und steuerbar, ohne Blockierung des Mischers und die beschleunigte mineralische Bindemittelzusammensetzung kann ohne Störungen appliziert werden.

Bevorzugt beträgt die Verweildauer der wasserhaltigen mineralischen Bindemittelzusammensetzung im Mischer weniger als 10 s, mehr bevorzugt weniger als 7 s, besonders bevorzugt weniger als 4 s.

Die mittlere Verweildauer der Bindemittelzusammensetzung in der Mischeinrichtung ist dabei die Zeitdauer, welche ein Partikel in der Mischeinrichtung, vom Einlass bis zum Auslass, durchschnittlich verweilt.

Überraschenderweise, bewirkt der Einsatz des dynamischen Mischers, insbesondere in der bevorzugten Form, nicht nur eine sehr gute Verteilung des Beschleunigers in der Fasern enthaltenden Bindemittelzusammensetzung, was zu einem homogenen Aushärten der beschleunigten Bindemittelzusammensetzung führt, ohne Bildung von Klumpen, sondern auch eine gute Verteilung der Fasern, ohne Zusammenpacken oder Anhäufungen der Fasern, wodurch der 3D-Druck rasch und ohne Unterbrechung durch Verstopfungen erfolgen kann.

Überraschenderweise kann der Mischer auch die üblichen kleineren Schwankungen in der Zusammensetzung der wasserhaltigen mineralischen Bindemittelzusammensetzung, wie Schwankungen in Wassergehalt, in der Partikelgrössenverteilung der Füllstoffe oder in der Zementqualität, ausgleichen, womit dieses Verfahren sehr robust wird, was äusserst vorteilhaft ist.

Die beschleunigte Bindemittelzusammensetzung ist unmittelbar nach dem Einmischen des Beschleunigers gut verformbar und kann, insbesondere mit einem beweglichen Druckkopf, in homogenen Schichten appliziert werden.

Die applizierten Schichten sind nach kurzer Zeit selbsttragend und zeigen eine rasche Festigkeitsentwicklung. Folgeschichten können daher in kurzen Abständen und in der Höhe von mehreren Zentimetern problemlos aufgetragen werden.

Die beschleunigte Bindemittelzusammensetzung wird bevorzugt über einen beweglichen Druckkopf appliziert.

Der Druckkopf verfügt insbesondere über wenigstens eine Austragsöffnung, welche identisch mit dem Auslass des kontinuierlichen Mischers sein kann, durch welche das aushärtbare Material ausgetragen werden kann.

Bevorzugt befindet sich an der Austragsöffnung eine Austragsdüse, die das ausgetragene Material formt. Die Form ist nicht beschränkt, sollte aber an die maximale Partikelgrösse des auszutragenden Materials angepasst sein. Bevorzugt weist die Austragsdüse eine rechteckige, quadratische oder runde Form auf.

Bevorzugt weist die Austragsdüse einen solchen Querschnitt auf, bei dem die kleinste Seite beziehungsweise der Durchmesser mindestens so gross ist wie 40%, bevorzugt mindestens 60%, mehr bevorzugt mindestens 80% der Länge der längsten Fasern.

In der Austragsdüse können noch weitere formgebende Elemente angebracht sein.

Überraschenderweise sind die Fasern nach dem Applizieren der Schichten nicht in eine spezielle Richtung ausgerichtet sondern mehrheitlich in alle Raumrichtungen gleichmässig verteilt. Dadurch können das Schwinden und mögliche Mikrorisse in alle Raumrichtungen verhindert oder vermindert werden.

In einer bevorzugten Variante ist der Druckkopf in ein, zwei oder drei Raumrichtungen bewegbar. Besonders bevorzugt ist ein Druckkopf, welcher in drei Raumrichtungen bewegbar ist. Dadurch können in besonders einfacher Art und Weise nahezu beliebig geformte Formkörper hergestellt werden.

Die Bewegung des Druckkopfs kann insbesondere realisiert werden, indem der Druckkopf auf einen herkömmlichen Roboterarm montiert ist, welcher in ein, zwei oder drei Raumrichtungen bewegbar ist.

Bevorzugt befindet sich der Druckkopf auf einem 3-Achsen-Portalroboter-System. Dies ermöglicht den raschen Druck auch von grossen Formkörpern mit flexibler Formgebung.

Es ist auch möglich, Bewegungen in ein, zwei oder drei Raumrichtungen durch entsprechende Bewegungen des Bauraumbereichs zu realisieren. Der Bauraumbereich ist dabei derjenige Bereich, beispielsweise eine Fläche, auf welche der Formkörper aufgebaut wird.

Bevorzugt weist die beschleunigte mineralische Bindemittelzusammensetzung, wenn sie bei 21 °C bereitgestellt und appliziert wurde, 8 Stunden, mehr bevorzugt 4 Stunden, am meisten bevorzugt 1 Stunde, nach dem Mischen mit dem wässrigen Beschleuniger eine Druckfestigkeit von mindestens 10 MPa auf, wobei die Druckfestigkeit gemäss EN 196-1 bestimmt wird.

Mit dem erfindungsgemässen Verfahren können überraschend schnell Formkörper durch schichtweisen Auftrag erstellt werden.

Die Höhe einer einzelnen Schicht, typischerweise in einer Richtung im Wesentlichen senkrecht zu den durch einzelne Schichten gebildeten Ebenen gemessen, insbesondere in vertikaler Richtung, beträgt bevorzugt 5 mm bis 200 mm, mehr bevorzugt 8 mm bis 100 mm, insbesondere 10 mm bis 50 mm.

Die Gesamthöhe des Formkörpers oder die Dicke aller Einzelschichten des Formkörpers zusammengenommen beträgt bevorzugt 0.1 m bis 100 m oder mehr, mehr bevorzugt 0.3 m bis 30 m, noch mehr bevorzugt 0.5 m bis 10 m, insbesondere 1 m bis 3 m. Dies insbesondere falls die mineralische Bindemittelzusammensetzung eine Mörtel- oder Betonzusammensetzung umfasst oder daraus besteht.

Die Oberfläche des Formkörpers kann, solange sie noch bearbeitbar ist, mit geeigneten Werkzeugen geglättet, ausgebessert oder speziell verformt werden. Dies kann als Teil der maschinellen Fertigung erfolgen, oder manuell als separater Schritt. Die Oberfläche kann auch mit einer funktionellen oder dekorativen Beschichtung versehen werden, beispielsweise mit einer Farbe.

Der Formköper kann auch, solange er noch bearbeitbar ist, mit geeigneten Werkzeugen geschnitten werden. So können Löcher, insbesondere für Festeröffnungen, Türöffnungen, Leitungsdurchgänge oder auch Schnitte, insbesondere für spätere Bearbeitungsschritte, in den Formkörper eingebracht werden.

Der mit dem erfindungsgemässen Verfahren hergestellte Formkörper kann nahezu jede beliebige Form aufweisen. Der Formkörper ist beispielsweise ein Bauwerk, ein Fertigteil für ein Bauwerk, ein Bauelement, ein Mauerwerk, eine Brücke, eine Säule, ein Dekorationselement wie beispielsweise künstliche Berge, Riffe oder Skulpturen, ein Becken, ein Brunnen oder eine Wanne. Dabei kann der Formkörper eine Vollform oder eine Hohlform, mit oder ohne Boden, darstellen.

Der Formkörper kann direkt vor Ort erstellt und nach der Applikation nicht mehr bewegt werden. Der Formkörper kann aber auch an einem anderen Ort, insbesondere in einer Fabrik, erstellt werden. Dies erfolgt bevorzugt auf einer Unterlage, auf der er nicht haftet. Nach dem Aushärten kann der Formkörper an den gewünschten Ort transportiert werden.

Ein weiterer Gegenstand der vorliegenden Erfindung ist ein Formkörper, hergestellt nach dem erfindungsgemässen Verfahren.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Verwendete Materialien

Sigunit^{®}-L53 AF (CC) ist ein wässriger alkalifreier Beschleuniger auf Basis von Aluminiumsulfat mit einem Feststoffgehalt von ca. 52 Gewichts-%, erhältlich bei Sika.

Betoflow^{®} D ist ein feines Calciumcarbonat-Pulver von 1-5 µm Partikelgrösse, erhältlich bei Omya.

Nekafill^{®} 15 ist ein Kalksteinmehl, erhältlich bei Kalkfabrik Netstal.

Sika^{®} ViscoCrete^{®}-3088 S ist ein wässriger Verzögerer/Fliessmittel auf Basis eines Polycarboxylatethers, erhältlich bei Sika.

Carbowet^{®} 4000 ist ein Netzmittel erhältlich bei Air Products Chemicals Europe.

Kuralon^{™} PVA Fiber RFS 400 ist eine Polyvinylalkohol-Faser von 18 mm Länge und einem Durchmesser von 200 µm, erhältlich bei Kuraray Europe GmbH.

Fibraflex-Fasern sind flache amorphe Metallfasern von 15 mm Länge, 1 mm Breite und 24 µm Höhe, erhältlich bei Saint-Gobain.

SikaPump^{®} ist ein Pumphilfsmittel, welches wasserlösliche Polymere enthält, erhältlich bei Sika.

### Beispiel 1

Ein Frischmörtel aus 120 kg Portlandzement CEM I 52.5, 92 kg Quarzsand von 0-1 mm mit etwa 2 Gewichtsprozent Feuchte, 33 kg Betoflow^{®}-D, 80 kg Nekafill^{®} 15, 1.6 kg Sika^{®} Viscocrete^{®}-3088 S, 2.15 kg Kuralon^{™} RFS Fasern, 0.004 kg Carbowet^{®} 4000 und 56.8 kg Wasser wurde zubereitet.

In einem Zwangsmischer wurden dafür zuerst alle festen Bestandteile des Mörtels ausser den Fasern 1 Minute gemischt, anschliessend wurden das Wasser, Carbowet und Viscocrete zugegeben und der Mörtel weitere 3 Minuten gut gemischt. Zuletzt wurden die Fasern langsam zugegeben und der Mörtel gemischt, bis die Fasern homogen verteilt waren.

Der Frischmörtel hatte ein Ausbreitmass von 315 mm, gemessen gemäss DIN EN 1015-3 nach dem Anheben des Setztrichters ohne Hübe des Ausbreittisches.

Für den 3D-Druck wurde ein 3-Achsen-Portalroboter eingesetzt.

Der Portalroboter war mit einem Druckkopf ausgestattet, der in alle 3 Raumrichtungen bewegbar war.

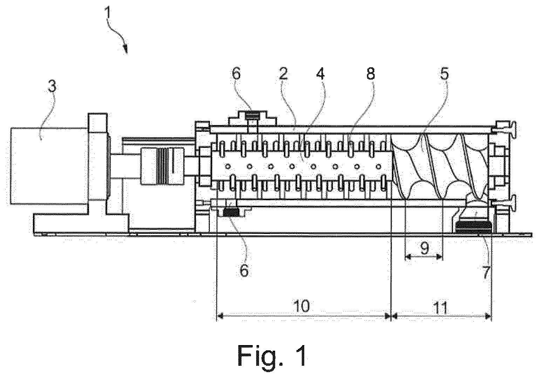

In den Druckkopf war ein dynamischer kontinuierlicher Mischer von etwa 60 kg Gewicht integriert. Der Mischer war wie in Fig. 1 gezeigt, aufgebaut. Er hatte einen Einlass für den Mörtel, einen Einlass für den wässrigen Beschleuniger und einen Auslass für den beschleunigten Mörtel. Die Trommel enthielt den Mischbereich und den Förderbereich und hatte einen Durchmesser von etwa 100 mm. Im Mischbereich war eine Rührwelle mit insgesamt 46 Stiften, die einen Abstand von etwa 24 mm hatten, und direkt daran anschliessend, auf der selben Achse angeordnet, war eine Förderschnecke mit 3 Windungen die einen Abstand von 26 mm hatten. Die Einlässe waren im Bereich der Rührwelle und der Auslass am Ende der Förderschnecke angebracht. Am Auslass war eine Runddüse mit einem Durchmesser von 40 mm angebracht. Die Fördereinrichtung zwischen dem Zwangsmischer, in dem der Mörtel gemischt wurde, und dem dynamischen kontinuierlichem Mischer auf dem Druckkopf bestand aus einer Schneckenpumpe und einem Schlauch mit einem Innendurchmesser von 35 mm und einer Gesamtlänge von 32 m.

Vor der ersten Mörtelmischung wurde eine Mischung aus 1 Beutel SikaPump^{®} Start 1 und 30 I Wasser, und anschliessend eine Mischung aus 15 kg Nekafill^{®} 15 und 15 kg Wasser, durch die Druckeinrichtung, das heisst, durch den Schlauch, den Mischer und den Druckkopf, in eine Abfallmulde gefördert.

Anschliessend wurde der Fasern enthaltende Mörtel mit einer Förderrate von etwa 33 kg/min durch den Schlauch zum Einlass des Mischers gefördert. Vorverdünntes Sigunit^{®}-L53 AF (CC) (75 Gewichts-% Sigunit^{®}-L53 AF (CC) und 25 Gewichts-% Wasser) wurde aus einem Vorratsbehälter mit einer Pumpe durch einen Schlauch mit einer Förderrate von etwa 350-400 ml/min zu dem zweiten Einlass des Mischers gefördert.

Der Frischmörtel und der Beschleuniger wurden in dem Mischer kontinuierlich, bei etwa 1200 Umdrehungen der Rührwelle pro Minute, gemischt und der beschleunigte Mörtel über den Auslass und die Düse des Druckkopfes in Schichten von etwa 50 mm Breite und 10 mm Höhe aufgetragen.

Auf einen mit Plastikfolie ausgelegten Boden wurde ein Rohr von etwa 800 mm Durchmesser, einer Höhe von etwa 800 mm und einer Wandstärke von etwa 50 mm, schichtweise mit einer Druckgeschwindigkeit von 20-30 Metern pro Minute aufgebaut.

Hierbei wurde die Förderrate der Mörtelmischung, die Dosierung des Beschleunigers, die Rotationsgeschwindigkeit des kontinuierlichen Mischers und die Bewegung des Druckkopfes über ein Computerprogramm gesteuert. Die Mörtelmischung konnte problemlos gefördert und gedruckt werden, ohne dass es zu Blockierungen oder Verstopfungen kam.

Die Temperatur der wasserhaltigen Mörtelmischung betrug etwa 19°C, die der Umgebungsluft etwa 21°C.

Während des ganzen Druckvorganges war der Druck in dem Schlauch zur Förderung des Frischmörtels im Bereich von 3-6 bar.

Nach etwa 12 Stunden wurde das Rohr mit Hilfe von Tragriemen und einem Kran auf eine Transportpalette gehoben und an einen Lagerort transportiert ohne dass es beschädigt wurde.

Nach sieben Tagen wurde das Rohr mit Hilfe eines schweren Hammers zerstört und die Bruchteile begutachtet. Die Fasern waren homogen verteilt und die Bruchflächen zeigten keine Hohlräume oder Fehlstellen, die Bruchflächen waren nicht in eine spezielle Richtung orientiert, die aufgetragenen Schichten zeigten einen gleich guten Verbund untereinander wie innerhalb der gleichen Schicht.

### Beispiel 2

Beispiel 1 wurde wiederholt wobei anstelle der Kuralon^{™}-Fasern, 2.15 kg Fibraflex-Fasern verwendet wurden.

Der Frischmörtel hatte ein Ausbreitmass von 305 mm, gemessen gemäss DIN EN 1015-3 nach dem Anheben des Setztrichters ohne Hübe des Ausbreittisches.

Bei diesem Versuch wurde statt der Runddüse eine Düse von 110 mm Länge und 12 mm Breite verwendet.

Der Druck erfolgte analog Beispiel 1 nur wurde anstelle eines Stuhles eine Wand von etwa 500 mm Höhe, etwa 600 mm Breite und etwa 110 mm Dicke in Schichten von jeweils etwa 15 mm Höhe erstellt. Die Fasern enthaltende Mörtelmischung konnte problemlos gefördert und gedruckt werden ohne dass es zu Blockierungen oder Verstopfungen kam.

Nach etwa 2 Tagen wurden Teile aus der Mauer gebrochen. Die Bruchkanten zeigte keine bevorzugte Richtung, die Kontaktflächen zwischen den Schichten waren keine bevorzugten Bruchstellen. Die Fasern waren homogen verteilt und die Bruchflächen zeigten kaum Hohlräume oder Fehlstellen.

### Vergleichsbeispiel 1

Der Versuch von Beispiel 1 wiederholt, wobei der Aufbau des dynamischen kontinuierlichen Mischers geändert wurde. Die Rührwelle war mit 92 Stiften im Abstand von 9 mm ausgerüstet und die Förderschnecke hatte 6 Windungen deren Abstände zum Auslass hin von 22 mm auf 5 mm abnahmen.

Unter den gleichen Bedingungen wie in Beispiel 1 beschrieben, wurde der Druck begonnen, musste aber nach etwa 2 Minuten abgebrochen werden, weil der Mischer blockierte.

### Kurze Beschreibung der Zeichnungen

Im Folgenden werden anhand der Zeichnung Ausführungsbeispiele der Erfindung näher erläutert.

Fig. 1 zeigt: schematische Darstellung eines beispielhaften Mischers.

Es sind nur die für das unmittelbare Verständnis der Erfindung wesentlichen Elemente gezeigt.

In Fig. 1 ist ein beispielhafter Mischer 1 dargestellt. Der Mischer 1 hat einen Antrieb 3 und eine Trommel 2 mit einem Mischbereich 10 und einem Förderbereich 11. In dem Mischbereich befindet sich eine Rührwelle 4 und zwei Einlässe 6, im Förderbereich 11 befindet sich eine Fördervorrichtung 5 und ein Auslass 7.

Dabei ist die Fördervorrichtung 5 direkt an der Rührwelle 4 anschliessend angeordnet, sodass die durch die Rührwelle 4 gemischte beschleunigte mineralische Bindemittelzusammensetzung direkt von der Fördervorrichtung 5 erfassbar und durch den Auslass 7 aus der Trommel 2 förderbar ist.

Die Fördervorrichtung 5 ist in dieser Darstellung als Förderschnecke ausgebildet. Die Förderschnecke in dieser Darstellung hat zwei vollständige Windungen. Je nach gewünschter Förderleistung kann die Förderschnecke anders dimensioniert bzw. ausgebildet werden. Die Fördervorrichtung 5 und die Rührwelle 4 sind auf einer selben Achse in der Trommel 2 angeordnet. In dieser Darstellung ist die Rührwelle 4 mit Stiften 8 bestückt, so dass bei einer Rotation der Rührwelle die wasserhaltige Bindemittelzusammensetzung in der Trommel von den Stiften 8 bewegt wird.

In dieser Darstellung sind zwei Einlässe 6 an der Trommel 2 angeordnet. In einer alternativen nicht dargestellten Variante hat die Trommel 2 jedoch nur einen Einlass. Dabei können die zu mischenden Komponenten bereits zusammengeführt werden, bevor sie über den Einlass in die Trommel 2 gefördert werden.

Bevorzugt ist ein Mischer 1 zum Mischen der wasserhaltigen mineralischen Bindemittelzusammensetzung mit dem wässrigen Beschleuniger wobei der Mischbereich 10 und der Förderbereich 11 in einer selben Trommel 2 angeordnet sind.

Bevorzugt sind die Rührwelle 4 und die Fördervorrichtung 5 auf einer selben Achse angeordnet.

Erfindungsgemäss umfasst das dynamische Mischelement eine Rührwelle 4 mit Rührelementen 8, wobei die Rührelemente 8 als Stifte ausgebildet sind und ein Abstand zwischen benachbarten Rührelementen mindestens 60%, mehr bevorzugt mindestens 80%, der Länge der längsten Fasern beträgt.

Dies ist für das Mischen der Fasern, der mineralischen Bindemittelzusammensetzung und dem wässrigen Beschleuniger besonders vorteilhaft.

Bevorzugt ist die Fördervorrichtung 5 als Förderschnecke mit Windungen ausgebildet, wobei ein Abstand 9 zwischen benachbarten Windungen der Förderschnecke mindestens 40%, bevorzugt mindestens 60%, mehr bevorzugt mindestens 80%, der Länge der längsten Fasern beträgt.

Dies ist zum Fördern der Fasern enthaltenden beschleunigten wasserhaltigen mineralischen Bindemittelzusammensetzung besonders vorteilhaft.

Weiters vorteilhaft ist es, wenn der Abstand zwischen den Enden der Rührelemente 8 der Rührwelle 4 und der Innenwand der Trommel 2 zumindest gleich gross ist wie der Durchmesser der grössten Partikel des Füllstoffes.

Besonders vorteilhaft ist es, wenn die Abstände 9 zwischen benachbarten Windungen der Förderschnecke im Wesentlichen gleich gross sind. Bevorzugt umfasst die Fördervorrichtung 5 zwei bis vier Windungen.

Solche Mischer sind speziell gut geeignet, den wässrigen Beschleuniger, die Fasern und die wasserhaltige mineralische Bindemittelzusammensetzung homogen und rasch zu mischen, ohne dass die Fasern verklumpen oder zu Verstopfungen führen.

## Patentansprüche

1. Verfahren zur Applikation eines Fasern enthaltenden Baustoffes, insbesondere mittels 3D-Druck, umfassend die Schritte
- Bereitstellen einer wasserhaltigen mineralischen Bindemittelzusammensetzung, mindestens eines wässrigen Beschleunigers, und Fasern,
- Zuführen der wasserhaltigen mineralischen Bindemittelzusammensetzung, insbesondere mittels einer Pumpe, zu einem kontinuierlichen Mischer (1) umfassend
• einen Antrieb (3),
• einen Mischbereich (10) umfassend mindestens einen Einlass (6) und mindestens ein dynamisches Mischelement, wobei das dynamische Mischelement eine Rührwelle (4) mit Rührelementen (8) umfasst, wobei die Rührelemente (8) als Stifte ausgebildet sind und ein Abstand zwischen benachbarten Rührelementen mindestens 60%, mehr bevorzugt mindestens 80%, der Länge der längsten Fasern beträgt, und
• einen mit dem Mischbereich (10) verbundenen Förderbereich (11) umfassend mindestens eine Fördervorrichtung (5) und einen Auslass (7),
wobei die wasserhaltige mineralische Bindemittelzusammensetzung durch den mindestens einen Einlass (6) in den Mischbereich (10) gefördert wird,
- Zuführen der Fasern in den Mischbereich (10) des kontinuierlichen Mischers (1),
- Zuführen des mindestens einen wässrigen Beschleunigers für das Abbinden der wasserhaltigen mineralischen Bindemittelzusammensetzung in den Mischbereich (10) des kontinuierlichen Mischers (1),
- Vermischen des mindestens einen wässrigen Beschleunigers mit der wasserhaltigen mineralischen Bindemittelzusammensetzung und den Fasern im Mischbereich (10) des kontinuierlichen Mischers (1) zu einer beschleunigten Fasern enthaltenden mineralischen Bindemittelzusammensetzung,
- Fördern der beschleunigten Fasern enthaltenden mineralischen Bindemittelzusammensetzung mittels der Fördervorrichtung (5) zum Auslass (7), und
- Applizieren der beschleunigten Fasern enthaltenden mineralischen Bindemittelzusammensetzung, insbesondere schichtweise mittels eines beweglichen Druckkopfs.

2. Verfahren gemäss Anspruch 1, **dadurch gekennzeichnet, dass** die wasserhaltige mineralische Bindemittelzusammensetzung mindestens ein hydraulisches Bindemittel, bevorzugt ein zementöses Bindemittel, insbesondere Portlandzement, Calciumaluminatzement, Calciumsulfoaluminatzement oder Mischungen davon, umfasst.

3. Verfahren gemäss einem der vorhergehenden Ansprüche, **dadurch gekennzeichnet, dass** die Fasern ausgewählt sind aus der Gruppe bestehend aus Metallfasern, insbesondere Stahlfasern oder amorphe Metallfasern, mineralischen Fasern, insbesondere Glasfasern, Basaltfasern oder Wollastonit-Fasern, natürlichen Fasern, insbesondere Cellulosefasern, Hanffasern, Leinenfasern oder Seidenfasern, und Kunststofffasern, insbesondere Kohlenstofffasern, Fasern aus Polypropylen, Polyethylen, Polyvinylalkohol, Polyamid, Polyaramid, Polyacrylnitril oder Polyester, und Mischungen davon, wobei Metallfasern, Kohlenstofffasern, Fasern aus Polypropylen oder Fasern aus Polyvinylalkohol, oder Mischungen davon, bevorzugt sind.

4. Verfahren gemäss einem der vorhergehenden Ansprüche, **dadurch gekennzeichnet, dass** die Fasern flexibel sind und eine Biegesteifigkeit von maximal 20 N·mm², bevorzugt maximal 10 N·mm² mehr bevorzugt maximal 1 N·mm², besonders bevorzugt maximal 0.2 N·mm² aufweisen, wobei sich die Biegesteifigkeit bei flachen Fasern auf die Biegerichtung bezieht, in die die geringste Kraft für die Biegung nötig ist.

5. Verfahren gemäss einem der vorhergehenden Ansprüche, **dadurch gekennzeichnet, dass** die Fasern
a) rund sind und eine Länge von 5 mm bis 100 mm, bevorzugt von 8 mm bis 60 mm, mehr bevorzugt von 10 mm bis 30 mm, am meisten bevorzugt von 12 mm bis 20 mm und einen Durchmesser von 5 µm bis 500 µm, bevorzugt von 7 µm bis 300 µm, noch mehr bevorzugt von 10 µm bis 250 µm am meisten bevorzugt von 14 µm bis 200 µm aufweisen, oder
b) flach sind und eine Länge von 5 mm bis 100 mm, bevorzugt von 8 mm bis 60 mm, mehr bevorzugt von 10 mm bis 30 mm, am meisten bevorzugt von 12 mm bis 20 mm, eine Breite von 5 µm bis 2 mm, bevorzugt von 10 µm bis 1.5 mm, am meisten bevorzugt von 0.5 mm bis 1.2 mm und eine Höhe von 5 µm bis 300 µm, bevorzugt von 7 µm bis 250 µm, noch mehr bevorzugt von 10 µm bis 200 µm, am meisten bevorzugt von 20 µm bis 150 µm, aufweisen.

6. Verfahren gemäss einem der vorhergehenden Ansprüche, **dadurch gekennzeichnet, dass** ein Kubikmeter der die Fasern enthaltenden wasserhaltigen mineralischen Bindemittelzusammensetzung 0.4 bis 25 Liter Fasern, bevorzugt 0.5 bis 20 Liter Fasern, mehr bevorzugt 1 bis 15 Liter Fasern, gerechnet mit der Rohdichte der Fasern, enthält.

7. Verfahren gemäss einem der vorhergehenden Ansprüche, **dadurch gekennzeichnet, dass** die Fasern enthaltende wasserhaltige mineralische Bindemittelzusammensetzung ein Frischmörtel mit einem Ausbreitmass von mindestens 170 mm, bevorzugt von 200 bis 380 mm, besonders bevorzugt von 250 bis 350 mm, bestimmt gemäss DIN EN 1015-3 nach dem Anheben des Setztrichters ohne Hübe des Ausbreittisches, ist.

8. Verfahren gemäss einem der vorhergehenden Ansprüche, **dadurch gekennzeichnet, dass** der wässrige Beschleuniger mindestens eine Verbindung ausgewählt aus der Gruppe bestehend aus Aminoalkoholen, Alkali- und Erdalkalinitraten, Alkali- und Erdalkalinitriten, Alkali- und Erdalkalithiocyanaten, Alkali- und Erdalkalihalogeniden, Alkali- und Erdalkalicarbonaten, Glyzerin, Glyzerinderivaten, Glykolen, Glykolderivaten, Aluminiumsalzen, Aluminiumhydroxiden, Alkali- und Erdalkalihydroxiden, Alkali- und Erdalkalisilikaten, Alkali- und Erdalkalioxiden, Kristallisationskeimen, insbesondere Calcium-Silikat-Hydrat-Verbindungen in feinteiliger Form, und Mischungen davon, enthält.

9. Verfahren gemäss einem der vorhergehenden Ansprüche, **dadurch gekennzeichnet, dass** der wässrige Beschleuniger in einer Menge im Bereich von 0.1 bis 8 Gewichtsteilen, bevorzugt 0.3 bis 5 Gewichtsteilen, mehr bevorzugt 0.5 bis 2.5 Gewichtsteilen, gerechnet als Feststoff ohne Wasser, bezogen auf 100 Gewichtsteile mineralisches Bindemittel, dosiert wird.

10. Verfahren gemäss einem der vorhergehenden Ansprüche, **dadurch gekennzeichnet, dass** der kontinuierliche Mischer auf einem beweglichen Druckkopf angebracht ist.

11. Verfahren gemäss einem der vorhergehenden Ansprüche, **dadurch gekennzeichnet, dass** die Fördervorrichtung (5) als Förderschnecke mit Windungen ausgebildet ist, wobei ein Abstand (9) zwischen benachbarten Windungen der Förderschnecke mindestens 40%, bevorzugt mindestens 60%, mehr bevorzugt mindestens 80%, der Länge der längsten Fasern beträgt.

12. Verfahren gemäss Anspruch 11, **dadurch gekennzeichnet, dass** die Abstände (9) zwischen benachbarten Windungen der Förderschnecke im Wesentlichen gleich gross sind und/oder dass die Fördervorrichtung (5) zwei bis vier Windungen umfasst.

13. Verfahren gemäss einem der vorhergehenden Ansprüche, **dadurch gekennzeichnet, dass** die Fasern in der wasserhaltigen mineralischen Bindemittelzusammensetzung bereitgestellt und/oder dass die Fasern in der wasserhaltigen mineralischen Bindemittelzusammensetzung dem Mischer (1) zugeführt werden.

## Claims

1. Method for applying a fiber-containing building material, especially by means of 3D printing, comprising the steps of
- providing a hydrous mineral binder composition, at least one aqueous accelerator and fibers,
- feeding the hydrous mineral binder composition, especially by means of a pump, to a continuous mixer (1) comprising
• a drive (3),
• a mixing region (10) comprising at least one inlet (6) and at least one dynamic mixing element, where the dynamic mixing element comprises a stirring shaft (4) having stirring elements (8), the stirring elements (8) taking the form of pegs, and a distance between adjacent stirring elements being at least 60%, more preferably at least 80%, of the length of the longest fibers and
• a conveying region (11) connected to the mixing region (10) and comprising at least one conveying device (5) and an outlet (7),
the hydrous mineral binder composition being conveyed through the at least one inlet (6) into the mixing region (10),
- feeding the fibers into the mixing region (10) of the continuous mixer (1),
- feeding the at least one aqueous accelerator for the setting of the hydrous mineral binder composition into the mixing region (10) of the continuous mixer (1),
- mixing the at least one aqueous accelerator with the hydrous mineral binder composition and the fibers in the mixing region (10) of the continuous mixer (1) to give an accelerated fiber-containing mineral binder composition,
- conveying the accelerated fiber-containing mineral binder composition by means of the conveying device (5) to the outlet (7), and
- applying the accelerated fiber-containing mineral binder composition, in particular layer by layer by way of a movable printing head.

2. Method according to Claim 1, **characterized in that** the hydrous mineral binder composition comprises at least one hydraulic binder, preferably a cementitious binder, more particularly Portland cement, calcium aluminate cement, calcium sulfoaluminate cement, or mixtures thereof.

3. Method according to either of the preceding claims, **characterized in that** the fibers are selected from the group consisting of metal fibers, especially steel fibers or amorphous metal fibers, mineral fibers, especially glass fibers, basalt fibers or wollastonite fibers, natural fibers, especially cellulose fibers, hemp fibers, linen fibers or silk fibers, and polymeric fibers, especially carbon fibers, fibers of polypropylene, polyethylene, polyvinyl alcohol, polyamide, polyaramid, polyacrylonitrile or polyester, and mixtures thereof, preference being given to metal fibers, carbon fibers, fibers of polypropylene or fibers of polyvinyl alcohol, or mixtures thereof.

4. Method according to any of the preceding claims, **characterized in that** the fibers are flexible and have a flexural rigidity of not more than 20 N·mm², preferably not more than 10 N·mm², more preferably not more than 1 N·mm², very preferably not more than 0.2 N·mm², the flexural rigidity in the case of flat fibers being based on the flexural direction requiring the least force for flexure.

5. Method according to any of the preceding claims, **characterized in that** the fibers
a) are round and have a length of 5 mm to 100 mm, preferably of 8 mm to 60 mm, more preferably of 10 mm to 30 mm, most preferably of 12 mm to 20 mm, and a diameter of 5 µm to 500 um, preferably of 7 um to 300 um, more preferably still of 10 um to 250 um, most preferably of 14 um to 200 um, or
b) are flat and have a length of 5 mm to 100 mm, preferably of 8 mm to 60 mm, more preferably of 10 mm to 30 mm, most preferably of 12 mm to 20 mm, a width of 5 um to 2 mm, preferably of 10 um to 1.5 mm, most preferably of 0.5 mm to 1.2 mm, and a height of 5 um to 300 um, preferably of 7 um to 250 um, more preferably still of 10 um to 200 um, most preferably of 20 um to 150 um.

6. Method according to any of the preceding claims, **characterized in that** one cubic meter of the fiber-containing hydrous mineral binder composition contains 0.4 to 25 liters of fibers, preferably 0.5 to 20 liters of fibers, more preferably 1 to 15 liters of fibers, calculated with the apparent density of the fibers.

7. Method according to any of the preceding claims, **characterized in that** the fiber-containing hydrous mineral binder composition is a fresh mortar having a slump of at least 170 mm, preferably of 200 to 380 mm, very preferably of 250 to 350 mm, determined according to DIN EN 1015-3 after the raising of the slump cone without lifts of the flow table.

8. Method according to any of the preceding claims, **characterized in that** the aqueous accelerator comprises at least one compound selected from the group consisting of amino alcohols, alkali metal and alkaline earth metal nitrates, alkali metal and alkaline earth metal nitrites, alkali metal and alkaline earth metal thiocyanates, alkali metal and alkaline earth metal halides, alkali metal and alkaline earth metal carbonates, glycerol, glycerol derivatives, glycols, glycol derivatives, aluminum salts, aluminum hydroxides, alkali metal and alkaline earth metal hydroxides, alkali metal and alkaline earth metal silicates, alkali metal and alkaline earth metal oxides, crystallization nuclei, especially calcium silicate hydrate compounds in finely divided form, and mixtures thereof.

9. Method according to any of the preceding claims, **characterized in that** the aqueous accelerator is metered in an amount in the range from 0.1 to 8 parts by weight, preferably 0.3 to 5 parts by weight, more preferably 0.5 to 2.5 parts by weight, calculated as solid without water, based on 100 parts by weight of mineral binder.

10. Method according to any of the preceding claims, **characterized in that** the continuous mixer is mounted on a movable printing head.

11. Method according to any of the preceding claims, **characterized in that**
the conveying device (5) takes the form of a screw conveyor having turns, a distance (9) between adjacent turns of the screw conveyor being at least 40%, preferably at least 60%, more preferably at least 80% of the length of the longest fibers.

12. Method according to Claim 11, **characterized in that** the distances (9) between adjacent turns of the screw conveyor are of substantially equal size and/or **in that** the conveying device (5) comprises two to four turns.

13. Method according to any of the preceding claims, **characterized in that** the fibers are provided in the hydrous mineral binder composition and/or **in that** the fibers are fed in the hydrous mineral binder composition to the mixer (1).

## Revendications

1. Procédé d'application d'un matériau de construction contenant des fibres, en particulier au moyen d'une impression 3D, comprenant les étapes de
- mise à disposition d'une composition de liant minéral contenant de l'eau, d'au moins un accélérateur aqueux et de fibres,
- introduction de la composition de liant minéral contenant de l'eau, en particulier au moyen d'une pompe, dans un mélangeur en continu (1) comprenant
• un entraînement (3)
• une zone de mélange (10) comprenant au moins une entrée (6) et au moins un élément de mélange dynamique, l'élément de mélange dynamique comprenant un bras agitateur (4) doté d'éléments d'agitation (8), les éléments d'agitation (8) étant formés en tant que tiges et une distance entre des éléments d'agitation adjacents étant d'au moins 60 %, plus préférablement d'au moins 80 %, de la longueur des fibres les plus longues, et
• une zone de transport (11), reliée à la zone de mélange (10), comprenant au moins un dispositif de transport (5) et une sortie (7),
la composition de liant minéral contenant de l'eau étant transportée par l'au moins une entrée (6) dans la zone de mélange (10),
- introduction des fibres dans la zone de mélange (10) du mélangeur en continu (1),
- introduction de l'au moins un accélérateur aqueux pour la prise de la composition de liant minéral contenant de l'eau dans la zone de mélange (10) du mélangeur en continu (1),
- mélange de l'au moins un accélérateur aqueux avec la composition de liant minéral contenant de l'eau et les fibres dans la zone de mélange (10) du mélangeur en continu (1) pour donner une composition de liant minéral contenant des fibres accélérées,
- transport de la composition de liant minéral contenant des fibres accélérées au moyen du dispositif de transport (5) vers la sortie (7), et
- application de la composition de liant minéral contenant des fibres accélérées, en particulier par couches au moyen d'une tête d'impression mobile.

2. Procédé selon la revendication 1, **caractérisé en ce que** la composition de liant minéral contenant de l'eau comprend au moins un liant hydraulique, préférablement un liant cimentaire, en particulier un ciment Portland, un ciment d'aluminates de calcium, un ciment de sulfoaluminate de calcium ou des mélanges correspondants.

3. Procédé selon l'une quelconque des revendications précédentes, **caractérisé en ce que** les fibres sont choisies dans le groupe constitué par des fibres métalliques, en particulier des fibres d'acier ou des fibres métalliques amorphes, des fibres minérales, en particulier des fibres de verre, des fibres de basalte ou des fibres de wollastonite, des fibres naturelles, en particulier des fibres de cellulose, des fibres de chanvre, des fibres de lin ou des fibres de soie, et des fibres de matière plastique, en particulier des fibres de carbone, des fibres de polypropylène, de polyéthylène, de poly(alcool vinylique), de polyamide, de polyaramide, de polyacrylonitrile ou de polyester, et des mélanges correspondants, dans lequel les fibres métalliques, les fibres de carbone, les fibres de polypropylène ou les fibres de poly(alcool vinylique) ou des mélanges correspondants sont préférés.

4. Procédé selon l'une quelconque des revendications précédentes, **caractérisé en ce que** les fibres sont flexibles et présentent une rigidité à la flexion d'au maximum 20 N·mm², préférablement d'au maximum 10 N·mm², plus préférablement d'au maximum 1 N·mm², particulièrement préférablement d'au maximum 0,2 N·mm², la rigidité à la flexion pour des fibres plates se rapportant à la direction de flexion dans laquelle la force la plus faible pour la flexion est nécessaire.

5. Procédé selon l'une quelconque des revendications précédentes, **caractérisé en ce que** les fibres
a) sont rondes et présentent une longueur de 5 mm à 100 mm, préférablement de 8 mm à 60 mm, plus préférablement de 10 mm à 30 mm, le plus préférablement de 12 mm à 20 mm et un diamètre de 5 µm à 500 um, préférablement de 7 µm à 300 um, encore plus préférablement de 10 µm à 250 um, le plus préférablement de 14 µm à 200 µm, ou
b) sont plates et présentent une longueur de 5 mm à 100 mm, préférablement de 8 mm à 60 mm, plus préférablement de 10 mm à 30 mm, le plus préférablement de 12 mm à 20 mm, une largeur de 5 um à 2 mm, préférablement de 10 µm à 1,5 mm, le plus préférablement de 0,5 mm à 1,2 mm et une hauteur de 5 µm à 300 um, préférablement de 7 µm à 250 um, encore plus préférablement de 10 µm à 200 um, le plus préférablement de 20 µm à 150 µm.

6. Procédé selon l'une quelconque des revendications précédentes, **caractérisé en ce qu'**un mètre cube de la composition de liant minéral contenant de l'eau contenant les fibres contient 0,4 à 25 litres de fibres, préférablement 0,5 à 20 litres de fibres, plus préférablement 1 à 15 litres de fibres, calculé avec la densité apparente des fibres.

7. Procédé selon l'une quelconque des revendications précédentes, **caractérisé en ce que** la composition de liant minéral contenant de l'eau contenant des fibres est un mortier frais doté d'un étalement d'au moins 170 mm, préférablement de 200 à 380 mm, particulièrement préférablement de 250 à 350 mm, déterminé selon la norme DIN EN 1015-3 après le soulèvement du moule tronconique sans coups de la table d'étalement.

8. Procédé selon l'une quelconque des revendications précédentes, **caractérisé en ce que** l'accélérateur aqueux contient au moins un composé choisi dans le groupe constitué par des aminoalcools, des nitrates alcalins et alcalino-terreux, des nitrites alcalins et alcalino-terreux, des thiocyanates alcalins et alcalino-terreux, des halogénures alcalins et alcalino-terreux, des carbonates alcalins et alcalino-terreux, la glycérine, des dérivés de glycérine, des glycols, des dérivés de glycol, des sels d'aluminium, des hydroxydes d'aluminium, des hydroxydes alcalins et alcalino-terreux, des silicates alcalins et alcalino-terreux, des oxydes alcalins et alcalino-terreux, des germes de cristallisation, en particulier des composés de type silicate de calcium hydraté sous forme finement divisée, et des mélanges correspondants.

9. Procédé selon l'une quelconque des revendications précédentes, **caractérisé en ce que** l'accélérateur aqueux est ajouté en une quantité dans la plage de 0,1 à 8 parties en poids, préférablement de 0,3 à 5 parties en poids, plus préférablement de 0,5 à 2,5 parties en poids, calculée comme solide sans eau, par rapport à 100 parties en poids de liant minéral.

10. Procédé selon l'une quelconque des revendications précédentes, **caractérisé en ce que** le mélangeur en continu est monté sur une tête d'impression mobile.

11. Procédé selon l'une quelconque des revendications précédentes, **caractérisé en ce que** le dispositif de transport (5) est réalisé en tant que vis de transport à spires, une distance (9) entre des spires adjacentes de la vis de transport étant d'au moins 40 %, préférablement d'au moins 60 %, plus préférablement d'au moins 80 %, de la longueur des fibres les plus longues.

12. Procédé selon la revendication 11, **caractérisé en ce que** les distances (9) entre des spires adjacentes de la vis de transport sont essentiellement de même taille et/ou **en ce que** le dispositif de transport (5) comprend deux à quatre spires.

13. Procédé selon l'une quelconque des revendications précédentes, **caractérisé en ce que** les fibres sont mises à disposition dans la composition de liant minéral contenant de l'eau et/ou **en ce que** les fibres dans la composition de liant minéral contenant de l'eau sont introduites dans le mélangeur (1).
